# EUROPÄISCHE PATENTSCHRIFT

(11) **EP 3 956 043 B1**
(45) Veröffentlichungstag und Bekanntmachung des Hinweises auf die Patenterteilung: **28.01.2026**
(21) Anmeldenummer: 20721167.3
(22) Anmeldetag: 15.04.2020
(51) Int. Cl.: B30B 15/02, B32B 37/10, A63C 5/12

(54) **FORMGARNITUR FÜR EINE SKIPRESSE**
FORM SET FOR A SKI PRESS
ENSEMBLE DE FORME POUR UNE PRESSE À SKI

(30) Priorität: 15.04.2019 AT 600982019
(43) Veröffentlichungstag der Anmeldung: 23.02.2022
(73) Patentinhaber: O+ GmbH, 5101 Bergheim (AT)
(72) Erfinder: RUMPFHUBER, Siegfried, 5310 Mondsee (AT); EDER, Christian, 4611 Buchkirchen (AT)
(74) Vertreter: Stolmár & Partner Patentanwälte PartG mbB
(86) Internationale Anmeldenummer: PCT/EP2020/060631
(87) Internationale Veröffentlichungsnummer: WO 2020/212451

(56) Entgegenhaltungen:
- AT-U1- 11 913
- CH-A- 307 722
- DE-A1- 2 902 613

## Beschreibung

### Gebiet der Erfindung

Das neuartige Herstellungskonzept für Ski ermöglicht eine serielle, industrielle Produktion mit der Losgröße 1.

### Stand der Technik

Die AT 11 913 U1 offenbart eine Vorrichtung zum Verpressen von Skiern, insbesondere zum Verklebpressen.

Unter dem aktuellen Stand der Technik können Ski effizient nur hergestellt werden, wenn ein einzelnes Modell in großen Stückzahlen durchgehend produziert wird. Eine Änderung des Modells ist aufwendig, mit hohen Rüstzeiten bzw. -kosten verbunden. Weiters sind aktuelle Verfahren auf maximalen Durchsatz optimiert, was abträglich für die eigentliche, optimale Herstellung der Ski sein kann. Das vorliegende Konzept ordnet die Ebenen (Hitze, Druck, Formgebung) einer Skiproduktionseinheit neu an, fügt neue Technologien hinzu, und gliedert den Produktionsprozess neu. Auf diese Weise ergibt sich ein neuartiges Herstellverfahren für Ski, welches dem gegenwärtigen Stand der Technik in Hinsicht auf Rüstzeiten, Formenkosten, Handling und Verbundwerkstoffverklebung überlegen ist. Mittels des neuen Verfahrens ist eine effiziente, serielle Produktion mit Losgröße 1 erstmals möglich.

Der Begriff "Ski" wird synonym für jede Art von Schneegleitbrett verstanden, bspw. Alpinski, Tourenski, Sprungski, Langlaufski, Monoski, oder Snowboards. Im Folgenden wird dafür durchgängig der Begriff "Ski" verwendet.

Ski sind Faserverbundwerkstücke, und werden durch Verkleben unterschiedlicher Materialien hergestellt. Üblicherweise wird der Klebeprozess in einem kombinierten Verfahren aus Druck und Temperatur durchgeführt.

Die Form und Funktion eines Skis definiert sich aus der Außenkontur, auch Seitenzug genannt, der Höhenkontur, auch Höhenzug genannt, der Buglinie, auch Vorspannung oder Camberline genannt und dem Aufbau, bzw. den unterschiedlichen Materialien, Materialstärken und Anordnung der unterschiedlichen Materialien.

Im sogenannten Sandwichverfahren werden dazu die notwendigen Bauteile schichtförmig aufeinandergelegt, und danach mit oder ohne Temperatur, und mit unterschiedlichen Drücken verklebt. Ein derartiger Prozess wurde bereits 1980 von Charles R. Hale patentiert (Hale, et al., 1980). Beispiele für diesen Prozess gibt es u.a.
von der Firma Stöckli und der Firma Atomic.

In einem ersten Schritt werden die für den Ski notwendigen Bauteile dazu beleimt, üblicherweise mit Epoxidharz, und schichtförmig aufeinandergelegt. Alternativ zur Beleimung mit flüssigem Klebstoff können auch vorimprägnierte Schichten, sogenannte Prepregs, oder Klebefilme zum Einsatz kommen. Diese verflüssigen sich meistens bei höheren Temperaturen, und erzeugen eine Verbindung mit den darüber und darunter liegenden Schichten.

In industriellen Verfahren wird dieser schichtförmige Aufbau üblicherweise in festen Formen aus Aluminium, Stahl oder ähnlichem vorgenommen. In dieser Skiform werden alle Bauteile üblicherweise in einen Formunterteil eingelegt. Nach dem Einlegen aller Bauteile wird die Form mit einem Formoberteil oder einem einfachen Deckel verschlossen. Die Skiform definiert vor allem die Außenkontur des Skis.

Im Manufakturbereich wird oft auf feste Formen verzichtet. Beim Verzicht auf feste Formen werden die Skibauteile entsprechend konturiert, und provisorisch fixiert. Üblicherweise werden zum Beispiel die Stahlkanten auf einem konturierten Belag mit Superkleber fixiert. Die darüber liegenden Schichten werden in der Folge ebenfalls, teilweise mit Übermaß, aufgelegt. Oft dient der unterste Bauteil aus Belag und Stahlkanten später aus Kontouranlauf anhand dem der fertig verpresste Ski ausgeschnitten wird. Nachteil dieser Methode ist, dass keine präzise Reproduzierbarkeit mit den Qualitätstoleranzen industrieller Formenverfahren gegeben ist. Dieser Manufakturaufbau wird auf einer flachen, festen Unterlage aufgelegt, welcher die Buglinie vorgibt. Der Deckel wird meist durch eine Flache feste Schicht aus Holz, Aluminium oder ähnlichem realisiert.

Auf diese Einheit aus Form bzw. Unterlage/Deckel sowie den dazwischen befindlichen Skimaterialien wird nun in jedem Fall Druck angebracht, im Regelfall, aber nicht zwingenderweise, in Kombination mit Temperatur. Der Druck wird vor allem im industriellen Verfahren durch eine Presse erzeugt. Im Pressenverfahren wird der Druck mechanisch aufgebracht; die Höhe ist abhängig vom Material, Aufbau, Klebesystem und anderen Parametern. Üblicherweise liegt er in einem Bereich zwischen zwei und zwölf bar. Im Manufakturverfahren wird der Druck gelegentlich auch durch Erzeugen eines Vakuums erzeugt. Beim Vakuumverfahren wird der zusammengebaute Ski mit einem Sack oder einer Folie luftdicht verschlossen und mittels Vakuumpumpe ein Vakuum erzeugt. (Marmota Magazin, 2018) Der entstehende Druck in diesem Verfahren liegt theoretisch somit maximal bei einem bar, in der Praxis meist knapp darunter. Eine weitere Möglichkeit ist, dass der Druck über das Befüllen von Schläuchen in einem festen Rahmen erzeugt wird, üblicherweise pneumatisch.

Die Höhenkontur des Skis wird im Sandwichverfahren durch die Konturierung der Skibauteile erzeugt. Unterschiedliche Schichtdicken, sowie ein definierter Lagenaufbau bestimmen die Höhenkontur bzw. den Höhenzug entlang der Längsachse des Skis. Im Pressenverfahren soll ein möglichst gleichmäßiger Druck auf die Höhenkontur des Skis erzeugt werden, um eine optimale, gleichmäßige, Verklebung trotz unterschiedlicher Werkstückdicken zu erzeugen.

Die Buglinie des Skis erzeugt die geometrische Form der Auflagefläche. Sie kann einerseits bereits durch die Skiform definiert werden, üblicherweise in Kombination mit einem Form-Unterbau, und teilweise auch mit einem Oberbau. Vor allem im industriellen Verfahren werden Ober und Unterbauten verwendet. Im Manufakturbereich wird teilweise auf den Oberbau verzichtet, besonders im Vacuumverfahren.

Der Ober- und Unterbau ist, wenn eine industrielle Presse verwendet wird, grundsätzlich permanent oder zumindest fest mit der Presse verbunden. Sie stellen ein Stempelsystem dar, welches durch Kontur und Gegenkontur den Druck auf die Skiform verteilen. Ziel ist dabei, den Höhenzug des Skis präzise herzustellen, und Temperatur und Druck so auf das zu verklebende Werkstück zu verteilen, dass eine optimale und gleichmäßige Verklebung entsteht.

Die Ober- und Unterbauten sind grundsätzlich immer für ein Skimodell also eine bestimmte Skilänge und Buglinie ausgelegt. Der Wechsel eines Skimodells ist somit immer mit einem Wechsel des Ober- und Unterbaus, bzw. mit einem Verstellen desselben verbunden. Gängige Methoden sind dabei die Verwendung von fixen Stempelsystemen aus festen Holzblöcken oder anderen festen und stabilen Werkstoffen oder, vor allem im industriellen Bereich, auch nachjustierbaren Stempelsystemen. Diese Systeme verfügen über eine manuelle Justierbarkeit der Buglinie über Stellschrauben oder Sägezahnprofilen, oder über eine automatisch geregelte Justierbarkeit über CNC Steuerelemente.

Wird zusätzlich mit Temperatur verpresst so befindet sich ein Heizelement, teilweise kombiniert mit einem Kühlelement, auf der Ebene zwischen Skiform und Ober- bzw. Unterbau. Das Heizelement kann in unterschiedlichster Form ausgeführt sein, wobei entweder Aluminiumheizplatten oder elektrische Heizmatten die gängigen Methoden sind.

Eine moderne Skipresse regelt über den Druckverlauf, die Zeit sowie den Heiz- und Abkühlzyklus die optimale Verpressung und Verklebung des Skis.

Eine Skipresse besteht somit aus vier wesentlichen Komponenten, der Presse, einem Ober und Unterbau, der eigentlichen Skiform und optionalen Heiz- und Kühlsystemen.

Die serielle Skiproduktion funktioniert momentan wie folgt:
1. Der eigentliche Ski wird außerhalb der Skipresse in Einzelteilen in eine Form gelegt.
2. Diese wird in einen Ober- und Unterbau eingelegt, welcher bereits in der Presse installiert ist. Ist zusätzliche eine Heiz- und allfällige Kühlebene vorhanden, ist diese ebenfalls schon davor in der Presse installiert.
3. Dort wird der Ski mit Druck und erhöhter Temperatur verpresst und üblicherweise auch noch in der Form wieder abgekühlt.
4. Anschließend wird die Presse geöffnet, die Form herausgenommen und der Ski entformt.
5. Parallel dazu wird in weiteren, redundanten Formensätzen bereits wieder ein Ski außerhalb der Presse zusammengebaut und dann in die Presse eingeschoben. Sind keine redundanten Formensätze vorhanden, wird die einzige Form entformt, gereinigt, und der Prozess beginnt von Neuem. In diesem Fall steht die Presse während der letztgenannten Arbeiten still.

Die Vorteile der "state of the art" Produktion sind hohe Geschwindigkeit und genaue Reproduzierbarkeit und sie ist daher ideal für große Losgrößen geeignet.

Solche Systeme haben aber auch Nachteile. Um einen Modell- oder Längenwechsel durchzuführen, muss der Ober- und Unterbau gewechselt oder verstellt werden, was mit diesem System sehr aufwendig und mit Rüstzeiten und dementsprechend Kosten verbunden ist. Außerdem werden pro Modell mehrere Formensätze benötigt, um seriell in hoher Geschwindigkeit produzieren zu können. Daraus ergeben sich hohe Formkosten. Speziell bei hochtemperierten Pressenverfahren werden die im Ski verwendeten Bauteile kritisch an ihre Belastbarkeitsgrenze erhitzt. Dieses System ist in der industriellen Skifertigung weit verbreitet. Üblicherweise wird hier ein Temperaturbereich in der Verarbeitung von 90 - 140° Celsius angegeben. Diese Temperatur liegt grenzwertig nahe oder über der typischen Vicat-Erweichungstemperaturen (VST) mancher verwendeter Materialien für Skibeläge von beispielsweise 128° Celsius. Typische Probleme wie Einfallstellen an Skibelägen sind bekannte Fehlermuster der industriellen Fertigung. Es sind aus der Industrie zu diesem bekannten Problem keine Stellungnahmen zu finden.

Die Hochtemperaturhärtung von Epoxidharzen (hohe Temperatur, kurze Härtungszeit) ergibt eine zu fast 100%ige Vernetzung und damit eine optimale Temperatur- und Feuchtebeständigkeit, Klebefestigkeit und Chemikalienbeständigkeit sowie geringste Ausgasungsraten. Gleichzeitig werden die Klebstoffe bei derartigen Verfahren aber maximal spröde. Um die gewünschten Eigenschaften der Hochtemperaturhärtung ohne deren Nachteile zu erhalten empfiehlt es sich, die Härtetemperatur langsam hinaufzufahren, z.B. 10°C/5 min, und ebenfalls wieder langsam herunterzukühlen. Der thermische Stress wird dadurch vermindert. Ein derartiges Verfahren würde aber in der "state of the art" der industriellen Skiproduktion die Zykluszeit unerwünscht erhöhen.

Ein weiterer Nachteil ist, dass die im Skibau üblicherweise verwendeten Materialien (Stahlkante, Kunststoffe, Holz, Aluminium, usw.) deutlich unterschiedliche Wärmespannungen aufweisen. Um diese Nachteile zu vermeiden wurde vor kurzem von der Firma Fischer Sports im Langlaufbereich ein Verfahren entwickelt, bei dem der Laufbelag nachträglich und ohne Hitze und Druck auf den Skikörper angebracht wird (EP 2928570). Als Vorteil wird in der Patentschrift die Vermeidung von unerwünschten Wärmespannungen, v.a. in Bezug auf die verwendeten Polyethylen-Beläge verwendet. Auf Marketingunterlagen des Unternehmens werden zudem die Vorteile als "unerreichte Wachsaufnahme und Schleifbarkeit" beschrieben. Ein derartiges Verfahren ist aber insbesondere nur für die Herstellung von Langlaufski geeignet, da diese geringeren mechanischen Belastungen als Alpinski unterliegen.

Der Kühlvorgang dient im Wesentlichen dazu, eine insgesamt schnelle Zykluszeit zu erzielen, ist aber ebenfalls für die Durchhärtung des Verbundbauteiles nicht durchwegs positiv zu sehen. Durch die rasche Abkühlung entstehen Spannungen im Bauteil, bzw. werden vorhandene Spannungen fixiert.

Hitze und Druck können ausschließlich erzeugt werden, während die Skiform in der Presse eingelegt ist. Ein daraus resultierender Nachteil ist, dass ein Einlegen von vortemperierten Bauteilen in eine vortemperierte Form nicht möglich ist. Weiters kann kein Tempern im physikalischen Sinn realisiert werden, da mit der Entnahme der Skiform aus der Presse, die Möglichkeit einer kontrollierten Heizung entfällt. Würde hingegen innerhalb der Presse getempert werden entsteht eine unerwünscht lange Zykluszeit.

### Darstellung der Erfindung

Aufgabe ist es, die oben genannten Nachteile zu vermeiden.

Eine erfindungsgemäße Formgarnitur zum Einlegen in eine und Ausschieben aus einer Skipresse umfasst einen Unterbau, der eine Grundplatte, eine Unterkontur und ein unteres Heizelement aufweist; und einen Oberbau, der eine Deckplatte, eine Oberkontur, und ein oberes Heizelement aufweist, so dass außerhalb der Skipresse eine Skiform zwischen den Unterbau und den Oberbau einlegbar ist.

Bevorzugt weist der Oberbau ferner Stahlprofile zur Druckverteilung auf, insbesondere querliegende, kettenartig angeordnete Stahlprofile.

Weiter bevorzugt weist der Oberbau ferner ein elastisches Ausgleichselement auf.

In einer weiteren Ausführungsform kann der Oberbau mittels Zugfedern (14) an der Deckplatte (16) befestigt sein.

Die Formgarnitur kann vorzugsweise Standholme und Druckfedern umfassen, die an den Standholmen angeordnet sind und die Formgarnitur offenhalten.

Eine erfindungsgemäße Skipresse weist eine oben genannte Formgarnitur auf. Insbesondere umfasst die Skipresse Positionierhilfen, die eingerichtet sind die Formgarnitur in der Skipresse zu fixieren.

Bei diesem neu entwickelten Konzept wird die Skipresse auf ihre Funktion als Druckpresse reduziert. In diese "Auf-/Zu" Presse wird eine Formen-Garnitur, bestehend aus der eigentlichen Skiform, und dem dazugehörigen Ober- und Unterbau, sowie den dazwischen liegenden Heizelementen, eingeführt. In der Produktion wird der Ski außerhalb der Presse in einem ersten Schritt in die Ski-Form eingelegt; dieses dann in einem zweiten Schritt in den dazu passenden Ober und Unterbau eingelegt. Dieser enthält bereits die Heiz- und Kühlelemente, d.h. bestimmte gewünschte Heiz- oder Kühlzyklen können auch außerhalb der Presse (vor und/oder nach dem Druckzyklus) laufen. Diese aus 3 Elementen bestehende Garnitur wird im nächsten Schritt in die Presse eingelegt. Während eine Garnitur in der Presse ist, kann bereits das nächste Modell vorbereitet werden. Ist der Druckzyklus beendet, wird die gesamte Pressengarnitur aus der Presse geschoben, und unmittelbar darauf kann die nächste vorbereitete Garnitur für den nächsten Druckzyklus eingeschoben werden. Die Rüstzeit der Presse reduziert sich somit auf die wenigen Sekunden des Aus- und Einschiebens der Garnituren. Der größte Vorteil des Konzepts liegt darin, dass der Wechsel von Modellen ohne jegliche Rüstzeit passiert. Es kann ein Ski vom Model XY in der Länge 175cm direkt nach dem Modell YX in der Länge 151cm produziert werden. Herkömmliche Verfahren benötigen bei einem Modell oder Längenwechsel immer zirka 30min Rüstzeit. Der aus technischer Sicht notwendige Druckzyklus kann somit auf maximale Weise genutzt werden. Pressenstillstände durch Umrüstprozesse werden auf das minimalst notwendige Maß reduziert. Ein weiterer Vorteil liegt darin, dass auch vor oder nach dem eigentlichen Pressen-Prozess die Formgarnitur definiert beheizt bzw. nachgetempert werden kann um gewünschte Bauteileffekte bzw. Veränderungen zu erzielen, und insbesondere Wärmespannungen optimal auszugleichen.

### Kurze Beschreibung der Figuren

Figur 1 zeigt einen Schnitt durch eine Formgarnitur in einer Skipresse; und
Figur 2 zeigt ein Revolververfahren unter Verwendung der Formgarnitur aus Figur 1.

### Beschreibung der bevorzugten Ausführungsform

Realisiert wird das Konzept mit einem System bestehend aus einer Skipresse 2 die mittels Hubkolben 1 einen Druckbalken 3 gegen einen festen Balken verfährt und damit Druck ausübt. Der Druck kann alternativ auch durch andere bekannte Methoden, wie einem Druckschlauch erzeugt werden. In diese Presse wird das neuartige System, bestehend aus einer Einheit aus Formen Ober- und Unterbau, Heizebenen und der eigentlichen Skiform, eingelegt.

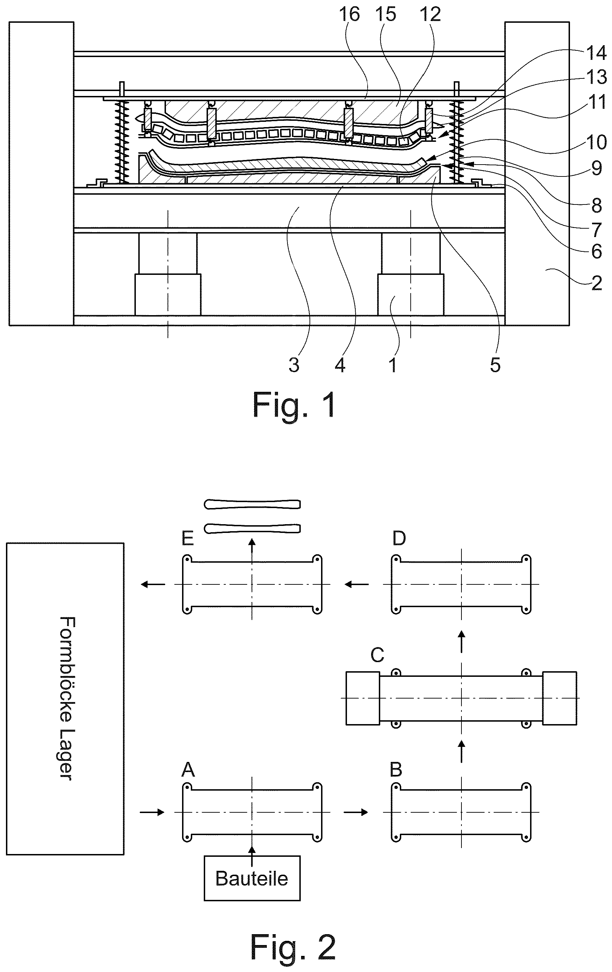

In Figur 1 ist der Formblock in einer Skipresse 2 dargestellt. Die einzelnen Bauteile sind der Hubkolben der Presse 1, die Skipresse 2, der Druckbalken 3 der Presse, die Grundplatte 4 des Formblocks, die Unterkontur 5 des Formblocks, die Positionierhilfen 6, das untere Heizelement 7, die Druckfeder 8, der Standholm 9, die Aluminium Ski Form 10, das obere Heizelement 11, die Stahlprofile 12 zur Druckverteilung, das elastische Ausgleichselement 13, die Zugfeder 14 um das Oberteil des Formblocks oben zu halten, die Oberkontur 15 des Formblocks und die Deckplatte 16 des Formblocks

Den unteren Teil der Einheit bildet die Grundplatte des Formblocks 4, die Unterkontur des Formblocks 5 aus Holz und das untere Heizelement 7. Mit Druckfedern 8 und Standholmen 9 wird das System offengehalten. Die Skiform an sich 10 befindet sich in der Mitte der Einheit. Aus dem oberen Heizelement 11, den Stahlprofilen zur Druckverteilung 12, sowie einem elastischen Ausgleichselement 13 und der Oberkontur des Formblocks aus Holz 15 setzt sich der obere Teil der Einheit zusammen. Diese wird mit Zugfedern 14 an der Deckplatte 16 gehalten. Durch die Federunterstützung kann der obere Teil der Einheit einfach und mit Handkraft, beziehungsweise ohne zusätzliche Hilfsgeräte bedient werden. Die Skiform 10 kann dann einfach befüllt werden und in das System eingelegt werden.

Über Positionierhilfen 6 wird die Form im System fixiert und verankert. Ist die Form im System fixiert wird das gesamte System formschlüssig, und mit Hilfe von Positionierhilfen 6 in die Presse eingelegt. Auf Grund des hohen Gewichts der Formen-Systeme werden diese auf Rollensysteme, mit Robotern oder mit dem Hallenkran bewegt. Die Presse wird anschließend geschlossen und der Ski gepresst. Da die Presse die Federkraft der Druckfedern leicht überwinden kann stellen diese für den Prozess keine negativen Effekte dar, beziehungsweise kann ein notwendiger Druckausgleich einfach berechnet werden. Anschließend kann das GesamtSystem herausgenommen werden und bereits der nächste Formblock eingeschoben werden. Über ein Revolversystem können somit unterschiedliche Ski seriell in Losgröße 1 produziert werden.

Im Industriestandard werden Skipressen aufgrund der weiter oben beschriebenen Verfahren standardmäßig von einer Seite beladen bzw. gerüstet. Im vorliegenden Fall soll mittels eines revolvierenden Systems die Presse von einer Seite beladen werden und nach dem Durchschubprinzip auf der anderen Seite entladen werden. Dieses Revolversystem ist in Figur 2 ersichtlich. Figur 2 zeigt im Einzelnen in Schritt (A) die Bestückung des Formblocks, in Schritt (B) das Vorwärmen des Formblocks, in Schritt (C) den Formblock in der Presse, in Schritt (D) das Nachtempern des Formblocks und in Schritt (E) das Entformen der Ski. In Position (A) werden die Einheiten außerhalb der Presse, und idealerweise nahe an einem Bauteillager bestückt. Hier werden die Ski Einzelteile in der Skiform zusammengelegt, und die Skiform bereits in die Einheit eingelegt. In Position (B) kann, falls erwünscht, bereits ab diesem Einlegeschritt die komplette Einheit bereits beheizt werden. Die Einheit wird in Position (C) wie oben beschrieben in die eigentliche Presse eingeschoben. Nach der Verpressung kann die neuartige Einheit auf Wunsch noch in Position (D) nachtempern. Anschließend wird die Skiform in Position (E) entnommen und die Ski daraus entformt

Das erfindungsgemäße Verfahren zur Herstellung von Ski betrifft eine Neuanordnung der Systemkomponenten indem Ober- und Unterbau, Heizebene und Skiform zu einer Einheit zusammengefasst werden mit folgenden Vorteilen:
a) Rüstzeitenminimierung beziehungsweise Verlagerung von Rüstzeiten aus der Presse. Das eigentliche Rüsten der Presse wird auf das Ein- und Ausschieben der Einheit beschränkt. Dies ist eine drastische Reduktion der Rüstzeiten an der Presse und stellt somit eine maximal mögliche Auslastung der Presse dar.
b) Die Zykluszeit der Presse ist dadurch nicht mehr abhängig von der Anzahl der vorliegenden Formensätzen. Dadurch entsteht eine Kostenreduktion, da nicht mehr mehrere Formensätze angefertigt werden müssen, um die Presse optimal auszulasten.

Das selbsttragende System über Standholme und Federn hat folgende Vorteile:
a) Das Handling des sehr schweren Formoberbaus und oberen Heizelements wird dadurch erleichtert. Das hohe Gewicht dieser Komponenten führt dazu, dass diese im Stand der Technik immer fest mit der Presse verbunden werden müssen, was den Stand der Technik im Vergleich zum erfindungsgemäßen System schwerer Im Handling, komplizierter in der Fixierung, und langsamer in Bezug auf Rüstzeiten macht.

Die Möglichkeit des Vor- und Nachtemperns hat folgende Vorteile:
a) Die Neuanordnung der Heizebene im System beziehungsweise das Kombinieren der Heizebene mit der Skiform in der Einheit erlaubtes, die eigentliche Skiform unabhängig von der Einlagezeit in der Presse bzw. dem Druckzyklus zu temperieren. Dies wäre anders nur mit kombinierten, Heiz-/Form-Werkzeugen möglich. Derartige beheizte Formen sind aus anderen Branchen zwar bekannt, in der Skiindustrie aber nicht verbreitet im Einsatz. Die Herstellkosten derartiger beheizter Formen beträgt ein Vielfaches der erfindungsgemäßen Kombination aus unbeheizter Skiform mit darüber/darunter liegenden Heizelementen. Die Neuanordnung der Systemkomponenten stellt somit den einzigen Weg dar, wie vergleichsweise günstige Skiformen außerhalb der Skipresse temperiert werden können.
b) Die Nachteile der Auslegung des Heizzyklus auf eine optimale Pressenzykluszeit werden eliminiert, das bedeutet der Heizzyklus kann eigenständig und unabhängig vom Druckzyklus ausgelegt und optimiert werden was Vorteile hinsichtlich Ausgleichung von Strukturdefekten, Verbesserung der und Eliminierung von unerwünschten Spannungen/Wärmespannungen und Bauteilverzug mit sich bringt.

Das erfindungsgemäße Revolversystem unterscheidet sich vom Stand der Technik, , bzw. bekannten Systemen welche die Formgebung, Beheizung und Kühlung in einem Werkzeug vereinen. Besagte und bewegbare Werkzeuge sind teure, hochkomplexe und integrierte Metallwerkzeuge. Der hier vorgelegte Ansatz kombiniert eine Formebene die einfacher und kostengünstiger herzustellen ist als beheizte Werkzeuge mit einer Heizebene. Dieses System hat den in Bezug auf das thermische Tempern die gleichen Vorteile wie die bekannten, teureren und komplexeren Systeme. Im Vergleich zum bekannte industriellen Verfahren der Skifertigung entsteht aber der Vorteil dass eine serielle Einzelfertigung nach dem Fließbandprinzip produziert werden kann. Das führt zu einer einfachen und effizienten Produktionslogistik bei vergleichsweise günstigen Anschaffungskosten der dafür notwendigen Werkzeuge und Systembestandteile.

Die erfindungsgemäße Formgarnitur kann auch statt der Druckfedern 8 und dem Standholm 9 Hydraulikzylinder aufweisen, die entsprechend an der Grundplatte 4 und der Deckplatte 16 befestigt sind und die dazu dienen, die Grundplatte 4 und die Deckplatte 16 zueinander zu pressen. Die Hydraulikzylinder arbeiten also als Zugzylinder.

## Patentansprüche

1. Formgarnitur zum Einlegen in eine und Ausschieben aus einer Skipresse (2) umfassend
einen Unterbau, der eine Grundplatte (4), eine Unterkontur (5) und ein unteres Heizelement (7) aufweist; und
einen Oberbau, der eine Deckplatte (16), eine Oberkontur (15), und ein oberes Heizelement aufweist, so dass außerhalb der Skipresse eine Skiform zwischen den Unterbau und den Oberbau einlegbar ist.

2. Formgarnitur nach Anspruch 1, bei der der Oberbau ferner Stahlprofile zur Druckverteilung (12) aufweist.

3. Formgarnitur nach einem der vorhergehenden Ansprüche, bei der der Oberbau ferner ein elastisches Ausgleichselement (13) aufweist.

4. Formgarnitur nach einem der vorhergehenden Ansprüche, bei der der Oberbau mittels Zugfedern (14) an der Deckplatte (16) befestigt ist.

5. Formgarnitur nach einem der vorhergehenden Ansprüche, ferner umfassend Standholme (9) und Druckfedern (8), die an den Standholmen (9) angeordnet sind und die Formgarnitur offen halten.

6. Skipresse (2), umfassend eine Formgarnitur nach einem der vorhergehenden Ansprüche, ferner umfassend Positionierhilfen (6), die eingerichtet sind die Formgarnitur in der Skipresse zu fixieren.

7. Revolververfahren zur Skiherstellung unter Verwendung eines Formblocks nach einem der vorhergehenden Ansprüche, umfassend die Schritte:
- Bestücken des Formblocks (A);
- Einbringen des Formblocks in die Skipresse und Pressen des Formblocks (C); und
- Entfernen des Formblocks aus der Skipresse und Entformen des Skis (E),
wobei die Schritte (A, C, E) gleichzeitig an jeweils unterschiedlichen Formblöcken durchgeführt werden.

8. Revolververfahren nach Anspruch 7, bei dem vor dem Einbringen des Formblocks in die Skipresse der Formblock vorgewärmt (B) wird und/oder vor dem Entformen der Ski der Formblocks nachgetempert wird (D).

## Claims

1. Mold set for insertion into and removing out of a ski press (2) comprising:
a lower structure having a base plate (4), a lower contour (5) and a lower heating element (7); and
an upper structure having a cover plate (16), an upper contour (15) and an upper heating element, so that a ski mold outside of the ski press can be inserted between the lower structure and the upper structure.

2. Mold set according to claim 1, wherein the upper structure further comprises steel profiles (12) for pressure distribution.

3. Mold set according to one of the preceding claims, in which the upper structure further comprises an elastic compensating element (13).

4. Mold set according to one of the preceding claims, in which the upper structure is attached to the cover plate (16) by means of tension springs (14).

5. Mold set according to one of the preceding claims, further comprising stand bars (9) and compression springs (8) which are arranged on the stand bars (9) and hold the molded fitting open.

6. Ski press (2), comprising a mold set according to one of the preceding claims, further comprising positioning aids (6) which are configured to fix the mold set in the ski press.

7. Revolver method for ski production using a molding block according to one of the preceding claims, comprising the steps:
- equipping the mold block (A);
- introducing the molding block into the ski press and pressing the molding block (C); and
- removing the molding block from the ski press and demolding of the ski (E),
wherein the steps (A, C, E) are carried out simultaneously on different mold blocks.

8. Revolver method according to claim 7, in which, before the mold block is introduced into the ski press, the mold block is preheated (B), and/or before the skis are removed from the mold, the mold block is post-tempered (D).

## Revendications

1. Ensemble de forme à insérer dans une presse à ski (2) et à extraire hors de celle-ci, comprenant une structure inférieure qui présente une plaque de base (4), un contour inférieur (5) et un élément chauffant inférieur (7) ; et
une structure supérieure qui présente une plaque de recouvrement (16), un contour supérieur (15), et un élément chauffant supérieur, de sorte qu'une forme de ski peut être insérée à l'extérieur de la presse à ski entre la structure inférieure et la structure supérieure.

2. Ensemble de forme selon la revendication 1, dans laquelle la structure supérieure a en outre des profilés en acier pour la répartition de la pression (12).

3. Ensemble de forme selon l'une quelconque des revendications précédentes, dans laquelle la structure supérieure a en outre un élément de compensation élastique (13).

4. Ensemble de forme selon l'une quelconque des revendications précédentes, dans laquelle la structure supérieure est fixée à la plaque de recouvrement (16) au moyen de ressorts de traction (14).

5. Ensemble de forme selon l'une quelconque des revendications précédentes, comprenant en outre des montants (9) et des ressorts de compression (8) qui sont disposés sur les montants (9) et qui maintiennent l'ensemble de forme ouvert.

6. Presse à ski (2) comprenant un ensemble de forme selon l'une quelconque des revendications précédentes, comprenant également des aides de positionnement (6), qui sont configurées pour fixer l'ensemble de forme dans la presse à ski.

7. Procédé de fabrication de skis par tourelle utilisant un bloc de forme selon l'une quelconque des revendications précédentes, comprenant les étapes consistant à :
- charger le bloc de forme (A) ;
- introduire le bloc de forme dans la presse à ski et presser le bloc de forme (C) ; et
- retirer le bloc de forme de la presse à ski et démouler le ski (E),
les étapes (A, C, E) étant effectuées simultanément sur des blocs de forme respectivement différents.

8. Procédé par tourelle selon la revendication 7, dans lequel, avant l'introduction du bloc de forme dans la presse à ski, le bloc de forme est préchauffé (B) et/ou, avant le démoulage du ski, le bloc de forme est recuit (D).
